# EUROPÄISCHE PATENTSCHRIFT

(11) **EP 2 707 313 B1**
(45) Veröffentlichungstag und Bekanntmachung des Hinweises auf die Patenterteilung: **23.09.2015**
(21) Anmeldenummer: 13729248.8
(22) Anmeldetag: 17.05.2013
(51) Int. Cl.: B65G 17/34, B65G 47/96

(54) **BETÄTIGUNGSEINHEIT FÜR EINE SORTIERVORRICHTUNG VON STÜCKGÜTERN**
ACTUATING UNIT FOR AN APPARATUS FOR SORTING ARTICLES
UNITÉ D'ACTIONNEMENT DESTINÉE À UN DISPOSITIF DE TRI PERMETTANT DE TRIER DES MARCHANDISES MANIPULÉES À L'UNITÉ

(30) Priorität: 21.05.2012 DE 102012010056
(43) Veröffentlichungstag der Anmeldung: 19.03.2014
(73) Patentinhaber: Interroll Holding AG, 6592 Sant' Antonino (CH)
(72) Erfinder: DROSTE, Heinrich, 74889 Sinsheim (DE); BERTRAN, Thomas, 74869 Schwarzbach (DE); KÄSER, Uwe, 69427 Mudau (DE)
(74) Vertreter: Müller-Boré & Partner Patentanwälte PartG mbB
(86) Internationale Anmeldenummer: PCT/EP2013/001479
(87) Internationale Veröffentlichungsnummer: WO 2013/174500

(56) Entgegenhaltungen:
- EP-B1- 0 930 248

## Beschreibung

### Gebiet der Erfindung

Die Erfindung bezieht sich auf eine Betätigungseinheit für eine Sortiervorrichtung sowie auf eine Sortiervorrichtung zum Sortieren von Stückgütern mit zumindest einer solchen Betätigungseinheit.

### Hintergrund der Erfindung und Stand der Technik

Sortiervorrichtungen zum Sortieren von Stückgütern sind bekannt. Solche Sortiervorrichtungen zum Sortieren von Stückgütern können mehrere Abwurfstationen umfassen, die längs einer Sortierstrecke aufeinanderfolgend angeordnet sind. Ferner können Sortiervorrichtungen eine Fördereinrichtung umfassen, über welche aufeinanderfolgende Transporteinheiten geführt und angetrieben sind. Jede der Transporteinheiten kann ein quer zur Sortierstrecke antreibbares Gurtband aufweisen. An einer Aufgabestation können Stückgüter an die einzelnen Transporteinheiten übergeben werden. Die Stückgüter können dann über einen gezielten Antrieb des Gurtbandes an einer der Abwurfstationen von den Transporteinheiten abgeworfen werden. Hierzu wird in der dem Oberbegriff des Anspruchs 1 entsprechenden EP 0 930 248 B1 beschrieben, dass der Antrieb der Gurtbänder der Transporteinheiten in den Abwurfstationen durch rein mechanische Antriebsmittel erfolgen kann und dass im Bereich der Abwurfstationen jeweils erste Antriebsmittel angeordnet sind, die mit zweiten Antriebsmitteln der Transporteinheiten korrespondieren. Die ersten Antriebsmittel und die zweiten Antriebsmittel können wahlweise in Kontakt gebracht werden, wenn eine Transporteinheit eine Abwurfstation passiert.

### Aufgabe

Die der vorliegenden Anmeldung zugrundeliegende Aufgabe besteht darin, ausgehend von dem genannten Stand der Technik, eine Betätigungseinheit für eine Sortiervorrichtung und eine Sortiervorrichtung zum Sortieren von Stückgütern mit zumindest einer solchen Betätigungseinheit zu schaffen, die eine verbesserte Betriebssicherheit gewährleistet und die einfach herzustellen ist.

### Lösung der Aufgabe

Die Aufgabe wird durch die Gegenstände der nebengeordneten Ansprüche gelöst. Vorteilhafte Ausführungsformen sind Gegenstände der Unteransprüche.

Ein erster unabhängiger Aspekt zur Lösung der Aufgabe betrifft eine Betätigungseinheit für eine Sortiervorrichtung, wobei die Betätigungseinheit eine Klappenhalterung und zumindest eine Klappe mit einer Antriebskomponente zur Übertragung einer Antriebskraft auf ein Antriebsrad einer Transporteinheit aufweist, wobei die Klappe in der Klappenhalterung zwischen einer Ruheposition und einer Antriebsposition verlagerbar gelagert ist, wobei an der Klappe eine Bewegungsbegrenzungskomponente vorgesehen ist, die mit einem Bewegungsbegrenzungselement der Klappenhalterung derart zusammen wirkt, dass die Verlagerungsbewegung der Klappe in Richtung der Ruheposition und/oder in Richtung der Antriebsposition begrenzt wird, wobei die Bewegungsbegrenzungskomponente als Vorsprung an der Klappe ausgebildet ist und das Bewegungsbegrenzungselement durch Ausbildung einer mit dem Vorsprung korrespondierenden Ausnehmung gebildet ist.

Die Antriebskomponente dient der Übertragung einer Antriebskraft auf ein Antriebsrad einer Transporteinheit, wenn sich die Klappe in einer Arbeitsposition befindet. Die Antriebskomponente kann als Reibfläche ausgebildet sein, so dass eine Reibkraft auf das Antriebsrad übertragen werden kann. Bei einer anderen Ausführungsform kann die Antriebskomponente eine Verzahnung aufweisen, die mit einem als Zahnrad ausgebildeten Antriebsrad in Kontakt gebracht werden kann. Die Klappenhalterung kann auch als Klappengestell bezeichnet werden. Das Bewegungsbegrenzungselement ist an der Klappenhalterung vorgesehen bzw. Bestandteil der Klappenhalterung. Die Betätigungseinheit kann zwei Klappen aufweisen. Die Betätigungseinheit kann Betätigungsmittel, wie z.B. pneumatische Aktuatoren oder ähnliches umfassen, welche die Klappe(n) zwischen der Ruheposition und der Antriebsposition verlagern. Die Bewegungsbegrenzungskomponente und das Bewegungsbegrenzungselement werden zusätzlich zu derartigen Betätigungsmitteln vorgesehen, um eine redundante Sicherheit zu erzielen.

Diese Gestaltung hat den Vorteil, dass im Fall des Versagens eines Bauteils, wie z.B. eines pneumatischen Aktuators, einer Verschraubung oder eines Dämpfungselements, die Verlagerungsbewegung der Klappe begrenzt ist. Die Klappe kann so nicht in die Störkontur der Transporteinheit oder der Antriebskette fallen. Eine solche Begrenzung kann eine Verlagerung über eine vorgegebene maximale Verlagerung hinaus verhindern, so dass eine Kollision der Klappe mit anderen im Betrieb der Sortiervorrichtung in Bewegung befindlichen Komponenten der Sortiervorrichtung, wie z.B. den Transporteinheiten, verhindert werden kann. Das Risiko eines Crashs oder eines Systemausfalls kann somit reduziert werden.

Eine Ausführungsform betrifft die vorstehend beschriebene Betätigungseinheit, wobei sowohl die Antriebskomponente als auch die Bewegungsbegrenzungskomponente integrale Bestandteile der Klappe sind. Integraler Bestandteil bedeutet, dass die Klappe mit der Antriebskomponente und der Bewegungsbegrenzungskomponente ein einstückiges Bauteil bilden. Ein einstückiges Bauteil kann aus einem Werkstück hergestellt worden sein.

Eine weitere Ausführungsform betrifft eine der vorstehend beschriebenen Betätigungseinheiten, wobei die Klappe als Blechbiegeteil hergestellt ist.

Bei dieser Ausführungsform kann die Klappe mit der Antriebskomponente und der Bewegungsbegrenzungskomponente aus einem einstückigen Blech gebogen sein. Dies hat den Vorteil, dass ein Verbinden von Einzelteilen durch Schweißen entfällt. Somit kann eine höhere Fertigungsgenauigkeit erreicht werden, weil Schweißverzug entfällt.

Der Vorsprung kann eine längliche Form, insbesondere eine zungenförmige Gestalt, aufweisen. Die als Vorsprung ausgebildete Bewegungsbegrenzungskomponente kann in die Ausnehmung hineinragen. Bei einem Verlagern in Richtung der Antriebsposition kann die Bewegungsbegrenzungskomponente am Ende der Verlagerungsbewegung an einem ersten Randbereich der Ausnehmung anschlagen, so dass die Verlagerungsbewegung der Klappe in Richtung der Antriebsposition begrenzt wird. Zusätzlich oder alternativ zu dem ersten Randbereich kann die Ausnehmung einen zweiten Randbereich aufweisen. Bei einem Verlagern in Richtung der Ruheposition kann die Bewegungsbegrenzungskomponente am Ende der Verlagerungsbewegung an dem zweiten Randbereich der Ausnehmung anschlagen, so dass die Verlagerungsbewegung der Klappe in Richtung der Ruheposition begrenzt wird.

Eine weitere Ausführungsform betrifft eine der vorstehend beschriebenen Betätigungseinheiten, wobei die Klappenhalterung als Blechbiegeteil ausgebildet ist. Die Klappenhalterung kann aus einem einstückigen Blech gebogen sein. Dies hat den Vorteil, dass ein Verbinden von Einzelteilen durch Schweißen entfällt. Somit kann eine höhere Fertigungsgenauigkeit erreicht werden, weil Schweißverzug entfällt.

Die Bewegungsbegrenzungskomponente kann in der Ausnehmung derart aufgenommen werden, dass eine Bewegung der Bewegungsbegrenzungskomponente durch den oben beschriebenen ersten und zweiten Randbereich der Ausnehmung begrenzt wird. Da die Bewegungsbegrenzungskomponente integraler Bestandteil der Klappe sein kann, wird durch die Begrenzung der Bewegungsmöglichkeit der Bewegungsbegrenzungskomponente gleichzeitig auch die Verlagerung der Klappe begrenzt. Die Ausnehmung kann in dem einstückigen Blech ausgebildet sein, aus dem die Klappenhalterung hergestellt ist.

Eine weitere Ausführungsform betrifft eine der vorstehend beschriebenen Betätigungseinheiten, wobei an der Klappe ein Achselement befestigt ist, wobei die Klappe über das Achselement verschwenkbar in der Klappenhalterung montiert ist. In diesem Fall kann die Verlagerungsbewegung der Klappe als eine Schwenkbewegung um den Mittelpunkt des Achselements beschrieben werden. Das Achselement kann sich zwischen zwei umgebogenen Laschen der Klappe erstrecken, insbesondere zwischen zwei rechtwinklig umgebogenen Laschen der Klappe. Die Laschen können integraler Bestandteil der Klappe sein. Insbesondere können die Laschen Bestandteil des einstückigen Blechstücks sein, aus dem die Klappenhalterung hergestellt ist. Die Laschen können Aufnahmelöcher aufweisen, durch welche das Achselement gesteckt sein kann. Dabei kann das Achselement auf beiden Seiten der Laschen über die Laschen hinausstehen. Das Achselement kann fest mit der Klappe verbunden sein, insbesondere verschraubt, verklebt, verpresst oder verschweißt sein. Alternativ kann das Achselement nur in axialer Richtung fixiert und über eine Spielpassung drehbar in Aufnahmelöchern der Klappe aufgenommen sein. Eine axiale Fixierung des Achselements in den Löchern kann in beliebiger Weise realisiert werden, z.B. über Sprengringe.

Je nachdem ob das Achselement fest mit der Klappe oder fest mit der Klappenhalterung verbunden ist, kann es zur Versteifung der Klappe und/oder der Klappenhalterung beitragen.

Eine weitere Ausführungsform betrifft eine der vorstehend beschriebenen Betätigungseinheiten, wobei das Achselement in Lagerstellen der Klappenhalterung aufgenommen ist, wobei zumindest eine der Lagerstellen durch eine U-förmige Ausnehmung gebildet ist, die nach einer Seite offen ist.

Zum Beispiel können pro Klappe zwei Lagerstellen vorgesehen sein, die beide auf derselben Seite offen sind. Dies hat den Vorteil, dass eine solche Klappe zusammen mit dem Achselement als vormontierte Baugruppe in die Lagerstellen eingelegt werden kann. Ein schneller Zugriff auf die Komponenten ist gewährleistet, insbesondere ein Zugriff auf Betätigungsmittel und/oder Dämpfungselemente, die einem gewissen Verschleiß unterliegen können. Eine Wartung wird so erleichtert. Die U-förmigen Ausnehmungen der Lagerstellen können nach oben offen sein, so dass eine Montage und Demontage der Klappen oder von ganzen Klappenbaugruppen in der fertig montierten Sortiervorrichtung möglich ist. Dabei kann bei der Montage zunächst die Klappenhalterung in der Sortiervorrichtung montiert werden. Anschließend können in die montierte Klappenhalterung die Klappen oder die Klappenbaugruppen eingesetzt werden.

Die Klappe kann in den Lagerstellen gegen Herausrutschen gesichert sein. Die Sicherung kann durch Verschrauben erfolgen. Zu diesem Zweck kann z.B. eine Mutter auf ein Außengewinde des Achselements geschraubt werden. Das Achselement kann einen Absatz aufweisen, so dass die Lagerstellen der Klappenhalterung zwischen dem Absatz und einer Mutter eingespannt werden können. In diesem Fall ist das Achselement sowohl in axialer Richtung als auch in Umfangsrichtung gegenüber der Klappenhalterung fixiert. Der Absatz kann einstückig an dem Achselement ausgebildet sein oder als separates Absatzelement, das fest mit dem Achselement verbunden sein kann, insbesondere verschraubt, verklebt, verpresst oder verschweißt. Eine Verlagerung der Klappe kann in diesem Fall durch eine Verdrehung der Klappe gegenüber dem Achselement erfolgen. Wenn das Achselement zwei Absätze aufweist, kann es mit zwei Lagerstellen verschraubt werden. In diesem Fall kann das Achselement der Versteifung der Klappenhalterung dienen. Bei einer Klappenhalterung mit zwei Klappen addiert sich die Steifigkeit beider Achselemente.

Eine weitere Ausführungsform betrifft eine der vorstehend beschriebenen Betätigungseinheiten, wobei die Betätigungseinheit ferner ein Betätigungsmittel aufweist, das an einem ersten Ende des Betätigungsmittels mit der Klappe und das an einem zweiten Ende des Betätigungsmittels mit der Klappenhalterung verbunden ist, wobei zwischen dem ersten Ende des Betätigungsmittels und der Klappe und/oder zwischen dem zweiten Ende des Betätigungsmittels und der Klappenhalterung ein Dämpfungselement angeordnet ist.

Ein solches Dämpfungselement kann aus einem Material bestehen, das einen elastischen Kunststoff, insbesondere ein Elastomer umfasst. Das Betätigungsmittel kann z.B. durch einen pneumatischen Aktuator, insbesondere einen Pneumatikzylinder, gebildet sein. Wenn nur ein Dämpfungselement auf einer Seite des Betätigungsmittels angeordnet ist, kann das Betätigungsmittel auf der anderen Seite über eine gelenkige Verbindung, z.B über ein Kugelgelenk an der benachbarten Komponente befestigt sein. Dämpfungselemente bewirken, dass die Stoßbelastung der Betätigungsmittel reduziert wird, was zu einer erhöhten Ausfallsicherheit aufgrund einer Verlängerung der Lebensdauer der Betätigungsmittel führen kann. Außerdem kann durch die Dämpfungselemente eine Geräuschsenkung erzielt werden.

Eine weitere Ausführungsform betrifft eine der vorstehend beschriebenen Betätigungseinheiten, wobei die Befestigung des Betätigungsmittels über das Dämpfungselement eine gelenkartige Verbindung bereit stellt, die eine elastische Verschwenkung des Betätigungsmittels gegenüber der Klappe oder der Klappenhalterung gewährleistet.

Ein solches Dämpfungselement dient nicht nur der Stoßdämpfung, sondern übernimmt gleichzeitig die Funktion eines Gelenks. Dabei kann eine Verschwenkung des Betätigungsmittels gegenüber der Klappe oder der Klappenhalterung um zumindest 1° oder um zumindest 2° oder um zumindest 3° gewährleistet werden.

Ein zweiter unabhängiger Aspekt zur Lösung der Aufgabe betrifft eine Sortiervorrichtung mit einer Betätigungseinheit gemäß einer der in Bezug auf den ersten unabhängigen Aspekt beschriebenen Ausführungsform einer Betätigungseinheit.

Eine Ausführungsform einer solchen Sortiervorrichtung betrifft eine Sortiervorrichtung, wobei die U-förmigen Ausnehmungen der Lagerstellen der Klappenhalterung in der montierten Position der Klappenhalterung in der Sortiervorrichtung nach oben offen sind.

Hierdurch wird eine einfache Montage und Demontage der Klappen oder ganzer Klappenbaugruppen in der fertig montierten Sortiervorrichtung ermöglicht.

Für jede der hinsichtlich des zweiten Aspekts beschriebenen Ausführungsformen gelten auch die vor- oder nachstehend gemachten Ausführungen zu den Ausführungsformen des ersten oder dritten Aspekts.

Ein dritter unabhängiger Aspekt zur Lösung der Aufgabe, der nicht beansprucht wird, betrifft ein Verfahren zur Montage einer Betätigungseinheit gemäß dem ersten Aspekt umfassend die Schritte
- Bereitstellen einer Klappenhalterung mit nach oben offenen Lagerstellen,
- Bereitstellen einer vormontierten Klappenbaugruppe umfassend eine Klappe, ein Achselement und ein Betätigungsmittel,
- Einsetzen der vormontierten Klappenbaugruppe in die Klappenhalterung, wobei das Achselement in die nach oben offenen Lagerstellen eingelegt wird und
- Fixieren des Achselements in den nach oben offenen Lagerstellen sowie Fixieren des Dämpfungselements an der Klappenhalterung.

Die Verfahrensschritte können in der genannten Reihenfolge erfolgen.

Das Verfahren kann ferner den Verfahrensschritt des Vormontierens der Klappenbaugruppe umfassen, der vor dem Einsetzen der Klappenbaugruppe erfolgt. Ferner kann die Montage den Schritt der Befestigung der Klappenhalterung in der Sortiervorrichtung umfassen, wobei dieser Schritt vor dem Einsetzen der vormontierten Klappenbaugruppe in die Klappenhalterung erfolgen kann. Die vormontierte Klappenbaugruppe kann ferner ein Dämpfungselement umfassen.

Für jede der hinsichtlich des dritten Aspekts beschriebenen Ausgestaltungen der Montage gelten auch die vorstehend gemachten Ausführungen zu den Ausführungsformen des ersten oder zweiten Aspekts.

Im Folgenden werden einzelne Ausführungsformen zur Lösung der Aufgabe anhand der Figuren beispielhaft beschrieben. Dabei weisen die einzelnen beschriebenen Ausführungsformen zum Teil Merkmale auf, die nicht zwingend erforderlich sind, um den beanspruchten Gegenstand auszuführen, die aber in bestimmten Anwendungsfällen gewünschte Eigenschaften bereitstellen. So sollen auch Ausführungsformen als unter die beschriebene technische Lehre fallend offenbart angesehen werden, die nicht alle Merkmale der im Folgenden beschriebenen Ausführungsformen aufweisen. Ferner werden, um unnötige Wiederholungen zu vermeiden, bestimmte Merkmale nur in Bezug auf einzelne der im Folgenden beschriebenen Ausführungsformen erwähnt. Es wird darauf hingewiesen, dass die einzelnen Ausführungsformen daher nicht nur für sich genommen, sondern auch in einer Zusammenschau betrachtet werden sollen. Anhand dieser Zusammenschau wird der Fachmann erkennen, dass einzelne Ausführungsformen auch durch Einbeziehung von einzelnen oder mehreren Merkmalen anderer Ausführungsformen modifiziert werden können. Es wird darauf hingewiesen, dass eine systematische Kombination der einzelnen Ausführungsformen mit einzelnen oder mehreren Merkmalen, die in Bezug auf andere Ausführungsformen beschrieben werden, wünschenswert und sinnvoll sein kann und daher in Erwägung gezogen und auch als von der Beschreibung umfasst angesehen werden soll.

### Kurze Beschreibung der Zeichnungen

- Figur 1: zeigt eine Draufsicht auf eine Sortiervorrichtung, bei der längs einer Sortierstrecke jeweils aufeinanderfolgend Abwurfstationen und beidseitig Abwurfrutschen angeordnet sind.
- Figur 2: zeigt einen der Schnittlinie II-II in Figur 1 entsprechenden Längsschnitt durch die Sortiervorrichtung mit längs der Sortierstrecke geführten Transporteinheiten, die ebenfalls aufeinanderfolgend angeordnet sind.
- Figur 3: zeigt einen der Schnittlinie III-III in Figur 2 entsprechenden Querschnitt durch die Sortiervorrichtung.
- Figur 4: zeigt in einem vergrösserten Ausschnitt aus Fig. 3 eine längs der Sortierstrecke geführte Transporteinheit mit einem quer zur Längserstreckung der Sortierstrecke antreibbaren Gurtband und den Mitteln zum wahlweisen Antreiben dieses Gurtbandes.
- Figur 5: zeigt einen der Schnittlinie V-V in Fig. 4 entsprechenden Längsschnitt durch die Transporteinheit.
- Figur 6: zeigt eine zweite Ausführungsform einer Sortiervorrichtung in einer geschnittenen Seitenansicht, die der Ansicht der ersten Ausführungsform aus Figur 4 entspricht.
- Figur 7a: zeigt eine perspektivische Teilansicht einer Betätigungseinheit.
- Figur 7b: zeigt eine vergrößerte Teilansicht aus Figur 7a.
- Figur 8a: zeigt eine geschnittene Teilansicht der Betätigungseinheit.
- Figur 8b: zeigt ein Dämpfungselement.
- Figur 9a: zeigt eine Klappenbaugruppe.
- Figur 9b: zeigt eine Klappenhalterung.

### Detaillierte Beschreibung der Zeichnungen

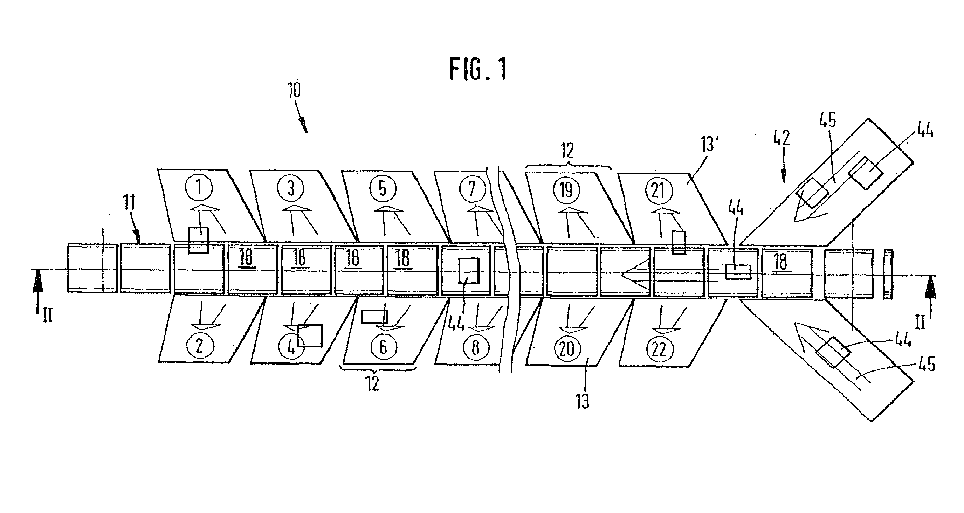

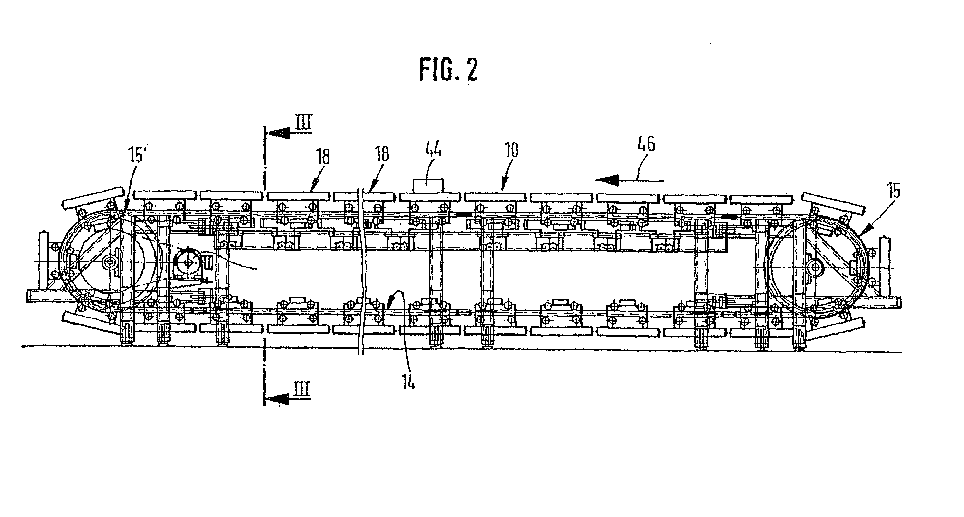

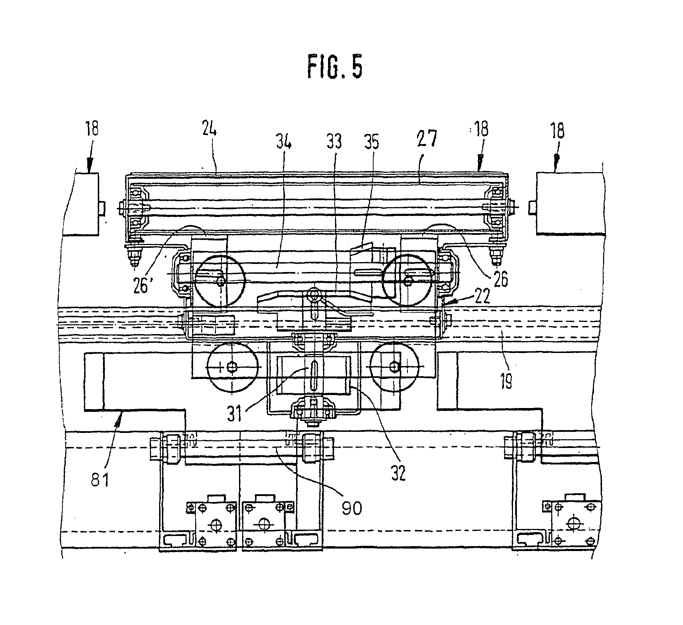

Figuren 1 bis 5 zeigen eine bekannte mechanisch angesteuerte Sortiervorrichtung zur Verdeutlichung der Funktionsweise einer solchen Sortiervorrichtung.

Die in diesen Zeichnungen veranschaulichte Sortiervorrichtung 10 zum Sortieren von Stückgütern umfasst eine langgestreckte Sortierstrecke 11.

Längs der Sortierstrecke 11 sind aufeinanderfolgend Abwurfstationen 12 angeordnet, die seitliche Abwurfrutschen 13, 13' umfassen. Die Sortiervorrichtung 10 umfasst ferner eine Fördereinrichtung 14 mit Umlenkrollen 15, 15'. Um die Umlenkrollen 15, 15' läuft ein Keilriemen 16 herum. Der Keilriemen ist als Endlosfördermittel ausgebildet. An dem Keilriemen 16 sind aufeinanderfolgende Transporteinheiten 18 angekoppelt.

Neben den Transporteinheiten 18 sind Führungsschienen 19, 19' angeordnet. Die Transporteinheiten 18 werden über Führungsrollen, die an den Führungsschienen 19, 19' angreifen, über den Keilriemen und entlang der Führungsschienen 19, 19' angetrieben und dabei über die Führungsrollen geführt.

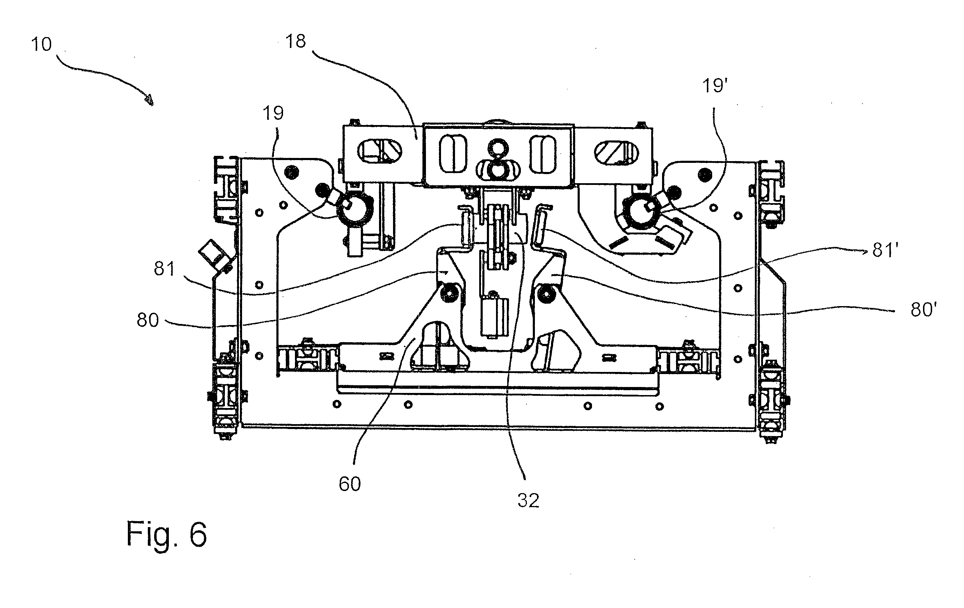

Dabei können die Transporteinheiten 18 auf beiden Seiten mit zwei in Förderrichtung im Abstand voneinander angeordneten Sätzen aus je drei Führungsrollenpaaren 20, 20' ausgerüstet sein. Dadurch ist eine präzise Längsführung der Transporteinheiten 18 gewährleistet. Bei einer anderen Ausführungsform kann eine andere Anordnungen der Führungsrollen gegeben sein. Eine exemplarische andere Ausführungsform ist z.B. in Figur 6 gezeigt.

Die Umlenkrollen 15, 15' sind an beiden Enden der Sortierstrecke angeordnet. Der geführte Keilriemen 16 läuft in einer Vertikalebene um die Umlenkrollen 15, 15'. Die an den Keilriemen 16 angekoppelten Transporteinheiten 18 werden im Bereich der Umlenkrollen umgelenkt und laufen unterhalb der Sortierstrecke zurück. Unterhalb der Sortierstrecke können, wie dargestellt, ebenfalls Führungsschienen 19, 19' angeordnet sein, so dass eine Führung der Transporteinheiten 18 auch unterhalb der Sortierstrecke gewährleistet ist. Im Bereich der Umlenkrollen 15, 15' können die beidseitig der Sortierstrecke verlaufenden Führungsschienen 19, 19' jeweils über Bogenstücke miteinander verbunden sein.

Der Keilriemen 16 der Fördereinrichtung 14 kann mittels eines über einen weiteren Riemenantrieb mit einer der Umlenkrollen verbundenen Elektromotor 21 angetrieben sein. Andere Antriebsvarianten, z.B. über einen Antrieb der Umlenkrollen, sind ebenfalls denkbar.

Jeder Transporteinheit 18 weist zumindest einen Fahrwagen 22 auf. Ein Fahrwagen 22 kann zumindest ein quer zur Längsrichtung der Sortierstrecke 11 antreibbares Gurtband 24 umfassen. Die Gurtbänder 24 der Transporteinheiten 18 können über Umlenkrollen 25, 25' mit sich in Laufrichtung des Keilriemens 16 erstreckenden Drehachsen geführt werden. Der Antrieb der Gurtbänder 24 kann über eine Reibrolle oder über mehrere Reibrollen 26, 26' erfolgen. Solche Reibrollen 26, 26' können z.B. am Untergurt des jeweiligen Gurtbandes 24 angreifen. Im Bereich der Reibrollen 26 kann innenseitig im Umschlingungsbereich des Gurtbandes 24 ein Gegendruckmittel, z.B. eine Gegendruckrolle 27, angeordnet sein.

Die Reibrollen 26, 26' können über ein Antriebsrad 32 angetrieben werden. Dabei kann die Drehbewegung des Antriebsrads 32 über ein Getriebe auf die Reibrollen 26, 26' übertragen werden. Ein solches Getriebe kann z.B. als Kegelradgetriebe 30 ausgebildet werden, das eine nach der vom Gurtband 24 der jeweiligen Transporteinheit 18 wegweisenden Seite vorstehende Antriebswelle 31 aufweist, auf der das Antriebsrad 32 drehfest aufgenommen ist.

Ein solches Kegelradgetriebe 30 kann in dem jeweiligen Fahrwagen 22 der Transporteinheit 18 aufgenommen sein und ein auf der genannten Antriebswelle 31 sitzendes Kegelrad 33 umfassen, das mit einem Kegelritzel 35 zusammenwirkt. Das Kegelritzel 35 kann mit einer Abtriebswelle 34 drehfest verbunden sein, auf der eine oder mehrere Reibrolle(n) 26, 26' befestigt sind.

Jeder Abwurfstation 12 der Sortierstrecke 11 kann eine Betätigungseinheit 50 zugeordnet sein. Die Betätigungseinheit 50 kann eine oder mehrere Klappen 80, 80' mit Antriebskomponenten 81, 81' umfassen, die zwischen einer Ruheposition und einer Antriebsposition so verlagert werden können, dass die jeweilige Antriebskomponente 81, 81' in der jeweiligen Arbeitsposition in Kontakt mit dem an der Betätigungseinheit 50 vorbeilaufenden Antriebsrad 32 gebracht werden kann.

Bei der in den Figuren 1 bis 5 gezeigten Ausführungsform der Sortiervorrichtung 10 umfassen die Betätigungseinheiten 50 zwei Antriebskomponenten 81, 81', die in der dargestellten Ausführungsform als Reibleisten ausgebildet und parallel zur Längsrichtung der Sortierstrecke 11 angeordnet sind und die wahlweise in die jeweilige Arbeitsposition verschwenkt werden können, so dass sie reibschlüssig mit dem vorbeilaufenden Antriebsrad 32 in Kontakt gebracht werden können.

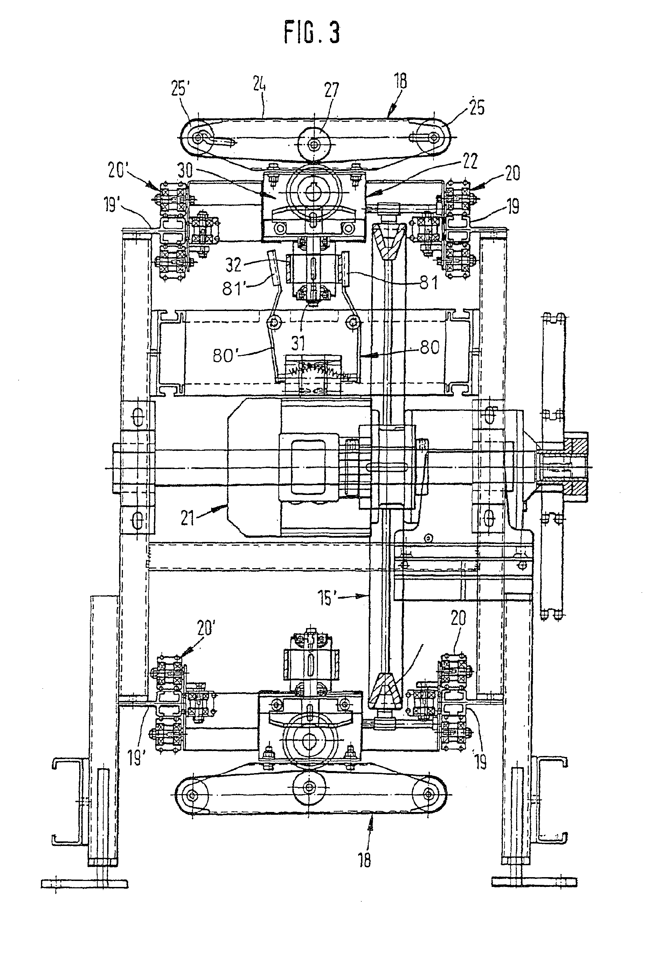

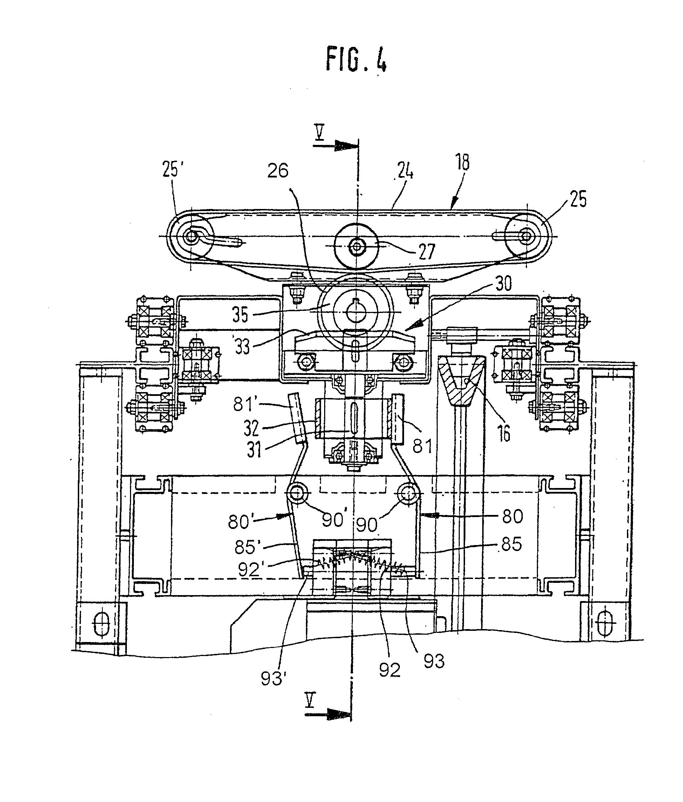

Angeordnet sind die Reibleisten jeweils an Klappen 80, 80', die in der in Figuren 3 und 4 dargestellten Ausführungsform auch als Doppellenker bezeichnet werden können. Die Doppellenker sind über Achselemente 90, 90' derart verschwenkbar angeordnet, dass wahlweise jeweils die eine Reibleiste auf einer Seite oder die andere Reibleiste auf der anderen Seite zur Anlage an das genannte Antriebsrad 32 gebracht werden können.

Die die Reibleisten tragenden Doppellenker weisen auf ihrer von der jeweiligen Reibleiste abgewandten Seite der Achselemente 90, 90' vorstehende Hebelarme 85, 85' auf. An den Hebelarmen 85, 85' sind in der in Figur 4 dargestellten Ausführungsform Federmittel 92, 92' befestigt, welche die Hebelarme 85, 85' mit einer Kraft beaufschlagen, welche die Reibleisten in die Ruheposition verschwenkt. Außerdem sind pneumatisch, hydraulisch oder elektromagnetisch wirkende Betätigungsmittel 93, 93' zum Verschwenken der Reibleisten in ihre Antriebsposition vorgesehen. Bei anderen Ausführungsformen kann auf die Federmittel verzichtet werden oder es kann lediglich ein Federmittel vorgesehen sein, das zwischen den Klappen 80, 80' angeordnet ist. Im Fall der Doppellenker kann ein solches einzelnes Federmittel 30 an den unteren Hebelarmen angeordnet sein, die über das Federmittel zueinander gezogen werden, so dass die auf der anderen Seite der Achselemente 90, 90' angeordneten Antriebskomponenten 81, 81' auseinander gedrückt werden. Wenn keine Federmittel vorgesehen sind, können die Betätigungsmittel 93, 93' so gestaltet sein, dass sie die Klappen 80, 80' sowohl in die Ruheposition als auch in die Arbeitsposition verlagern können. Solche Betätigungsmittel 93, 93' können z.B. durch zweifach wirkende Pneumatikzylinder ausgebildet sein. Alternativ können zwei getrennte Pneumatikzylinder vorgesehen sein.

In der in den Fig. 3 und 4 gezeigten Betriebsstellung befindet sich die in der Zeichnung rechte Reibleiste in Anlage an das auf der Antriebswelle 31 des Kegelradgetriebes 30 aufgenommene Antriebsrad 32. Diese rechte Reibleiste steht mithin in ihrer Antriebsstellung. Wenn eine Transporteinheit 18 mittels des Keilriemens 16 der Fördereinrichtung 14 im Bereich der betreffenden Abwurfstation 12 längs der Sortierstrecke bewegt wird, wirken das Antriebsrad 32 und die an diesem anliegende Reibleiste reibschlüssig zusammen und die dadurch erzeugte Drehbewegung der Antriebswelle 31 des Kegelradgetriebes 30 wird über die Reibrollen 26, 26' auf das Gurtband 24 übertragen, so dass das Gurtband 24 in der entsprechenden Richtung umläuft.

Ein gegensinniger Gurtbandantrieb liegt vor, wenn die in den Fig. 3 und 4 gezeigte linke Reibleiste in die Arbeitsposition verschwenkt und mit dem genannten Antriebsrad 32 in Kontakt gebracht wird.

Im Einsatz der Sortiervorrichtung 10 können z.B. mittels einer Aufgabestation 42 am Anfang der Sortierstrecke 11 Stückgüter 44 zugeführt werden, wie in Figur 1 mit Pfeilen 45 andeutet wird. Dabei kann z.B. jeweils ein Stückgut 44 auf eine der Transporteinheiten 18 aufgegeben werden, die mittels der Fördereinrichtung 14 in Richtung des Pfeils 46 längs der Sortierstrecke 11 bewegt werden.

Die Stückgüter 44 können mit einer Codierung versehen sein, die beim Aufgeben eines Stückgutes 44 auf eine bestimmte Transporteinheit 18 erfasst wird. In Abhängigkeit von dieser Codierung kann z.B. mittels einer nicht dargestellten Steuereinrichtung die Reibleiste derjenigen Abwurfstation 12 in ihre Antriebsstellung betätigt werden, an der das betreffende Stückgut abgeworfen werden soll. Andere Arten der Steuerung sind ebenfalls denkbar.

Angesichts der paarweisen Anordnung der Reibleisten an jeder Abwurfstation 12 und der wahlweisen Betätigung jeweils einer Reibleiste in ihre Antriebsposition kann wahlweise ein rechts- oder linksseitiger Abwurf der Stückgüter in eine der beidseitig von der Sortierstrecke angeordneten Abwurfrutschen 13, 13' erfolgen. Denkbar ist ebenfalls, dass Abwurfrutschen und Antriebskomponenten jeweils nur einseitig vorgesehen werden.

Die Antriebsräder und Antriebskomponenten können so gestaltet sein, dass sich unterschiedliche Beschleunigungen und/oder Geschwindigkeiten des angetriebenen Gurtbandes 24 ergeben. Anstelle eines Reibschlusses kann auch ein Formschluss zwischen Antriebsrädern und Antriebskomponenten zur Übertragung der Antriebsbewegung vorgesehen sein. In Bezug auf diese Gestaltungsmöglichkeiten der Antriebskomponenten und der korrespondierenden Antriebsräder wird auf die diesbezüglichen Ausführungen in der EP 0 930 248 B1 verwiesen, deren Inhalt insoweit in die vorliegende Anmeldung mit einbezogen wird. Diese Ausführungen gelten auch für die im Folgenden beschriebene Ausführungsform.

Eine weitere Ausführungsform der Sortiervorrichtung 10 wird unter Bezugnahme auf Figuren 6 bis 9b beschrieben. Um Wiederholungen zu vermeiden werden nur die Bestandteile der Sortiervorrichtung beschrieben, die sich von denen der zuvor beschriebenen Ausführungsformen unterscheiden. Ein besonderes Augenmerk wird auf die in den Figuren detailliert dargestellte Betätigungseinheit gelegt.

Figur 6 zeigt eine zweite Ausführungsform einer Sortiervorrichtung 10 in einer geschnittenen Seitenansicht, die der Ansicht der ersten Ausführungsform aus Figur 4 entspricht.

Die dargestellte Sortiervorrichtung 10 umfasst eine Transporteinheit 18, die auf Führungsschienen 19, 19' verfahrbar geführt ist. Die Führung unterscheidet sich von der zuvor beschriebenen Führung der ersten Ausführungsform. Hier weisen die Führungsschienen 19, 19' einen runden Querschnitt auf. Auf der in der Figur 6 rechts dargestellten Führungsschiene wird die Transporteinheit 18 über drei Rollen geführt, welche im Winkel von ca. 120° um die Führungsschiene 19' herum angeordnet sind. Über diese drei Rollen wird die Transporteinheit 18 horizontal und vertikal bestimmt geführt. An der in der Figur 6 links dargestellten Führungsschiene 19 wird die Transporteinheit 18 über zwei Rollen, welche auf gegenüberliegenden Seiten der Führungsschiene 19 angeordnet sind, lediglich vertikal geführt. Über diese Lagerung wird eine Überbestimmung und somit ein Klemmen der Transporteinheit 18 vermieden.

Unten an der Transporteinheit 18 ist ein Antriebsrad 32 dargestellt, das sich in Kontakt mit einer Antriebskomponente 81 einer Klappe 80 befindet. Beim Verfahren der Transporteinheit 18 auf der Führungsschiene 19, 19' kann in dieser Arbeitsposition der Klappe 80 von der Antriebskomponente 81 eine Reibkraft auf das Antriebsrad 32 übertragen werden. Die gegenüberliegende Klappe 80' befindet sich in einer Ruheposition, in der die Antriebskomponente 81' von dem Antriebsrad 32 weg verlagert angeordnet ist.

Die dargestellten Klappen 80, 80' sind in einer Klappenhalterung 60 verlagerbar aufgenommen, die im Folgenden detailliert beschrieben wird.

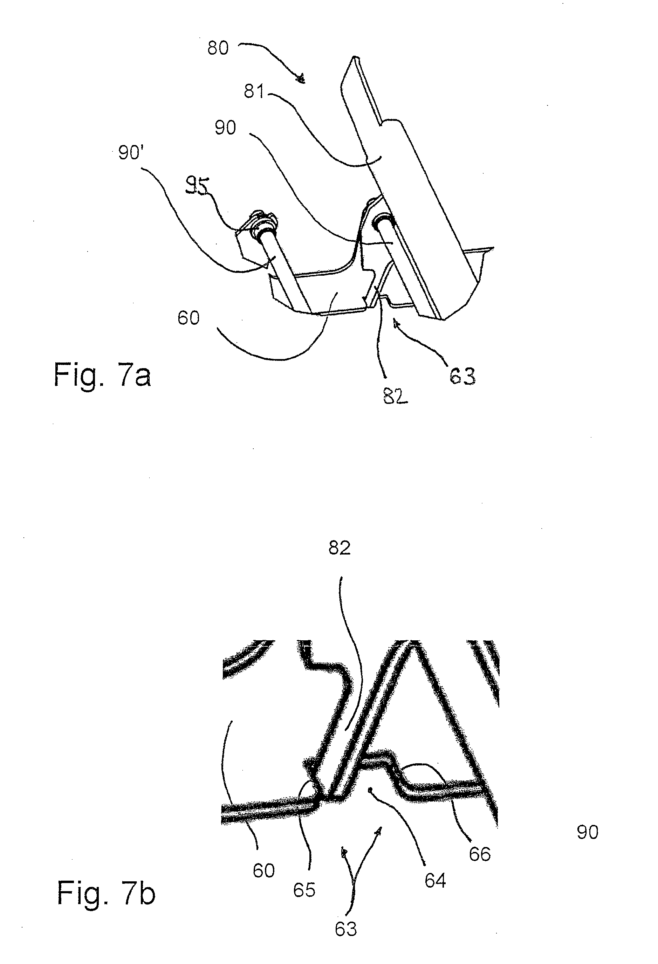

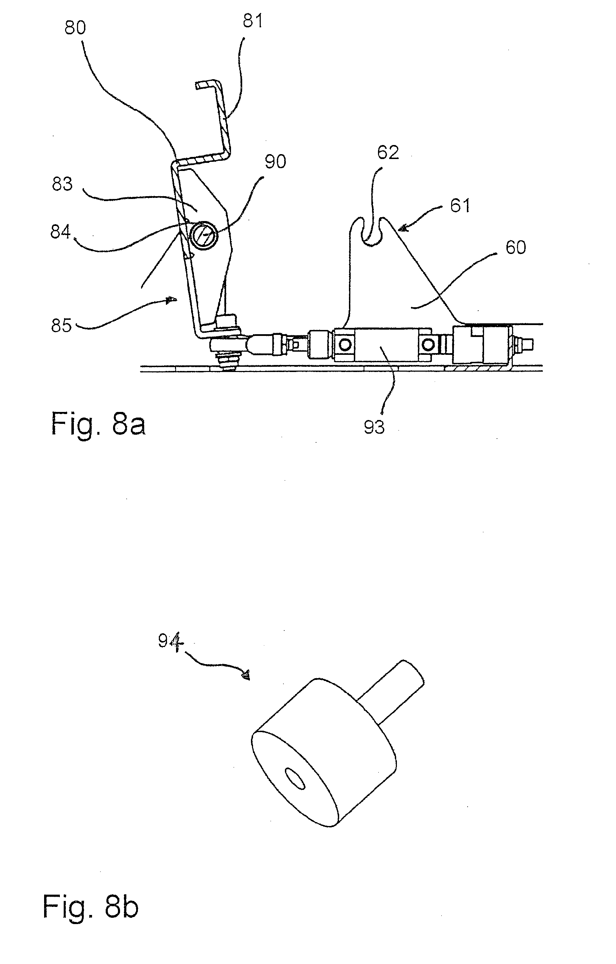

Figur 7a zeigt eine perspektivische Teilansicht der Betätigungseinheit, Figur 7b eine vergrößerte Teilansicht aus Figur 7a und Figur 8a eine geschnittene Teilansicht der Betätigungseinheit.

In der Teilansicht in Figur 7a und 7b wird die Klappe 80 dargestellt, die über ein Achselement 90 verschwenkbar in der Klappenhalterung gelagert ist. Das benachbarte Achselement 90' ist ohne daran befestigte Klappe dargestellt. An der Klappe 80 ist im oberen Bereich die Antriebskomponente 81 dargestellt. Die Klappe 80 befindet sich in der dargestellten Form in ihrer Ruheposition.

Die Klappe 80 weist an ihrem Ende, das in Bezug auf das Achselement 90 auf der der Antriebskomponente 81 abgewandten Seite angeordnet ist, eine Bewegungsbegrenzungskomponente 82 auf, die als länglicher, zungenförmiger Vorsprung ausgebildet ist. Die Bewegungsbegrenzungskomponente 82 steht in Kontakt mit einem korrespondierenden Bewegungsbegrenzungselement 63 der Klappenhalterung 60. Wie in der vergrößerten Darstellung in Figur 7b dargestellt ist, wird das Bewegungsbegrenzungselement 63 durch eine Ausnehmung 64 gebildet, die durch einen ersten Randbereich 65 und einen zweiten Randbereich 66 begrenzt wird. Die beiden Randbereiche 65, 66 limitieren die mögliche Verlagerungsbewegung der Klappe 80. In der dargestellten Ruheposition berührt die Bewegungsbegrenzungskomponente 82 den ersten Randbereich 65 und kann daher nicht über die Ruheposition hinaus schwenken. Wenn die Klappe 80 in die Antriebsposition verschwenkt wird, verhindert die Berührung der Bewegungsbegrenzungskomponente 82 mit dem zweiten Randbereich 66 eine Verlagerung der Klappe 80 über die Arbeitsposition hinaus.

In der Figur 8a ist eine in der Klappenhalterung 60 montierte Klappe 80 dargestellt, die über ein Achselement 90 in einer Lagerstelle eingesetzt ist. Über das Achselement 90 ist die Klappe 80 verschwenkbar in der Klappenhalterung 60 gelagert. Die gegenüberliegende Lagerstelle 61 ist unverdeckt ohne darin montierte Klappe dargestellt. Die Lagerstelle 61 weist eine U-förmige Ausnehmung 62 auf, in die ein zweites Achselement einer zweiten Klappe eingelegt werden kann.

Die Klappe 80 weist einen Hebelarm 85 auf, der mit einem Betätigungsmittel 93 gelenkig verbunden ist. Das Betätigungsmittel 93 ist in der dargestellten Ausführungsform als zweifach wirkender Pneumatikzylinder ausgebildet, der die Klappe 80 sowohl in die Ruheposition als auch in die Antriebsposition verlagern kann. Auf der der Klappe 80 gegenüberliegenden Seite des Betätigungsmittels 93 ist ein Dämpfungselement 94 angeordnet, über welches das Betätigungsmittel 93 an der Klappenhalterung 60 befestigt ist. Figur 8b zeigt das Dämpfungselement 94 im Detail. Das Dämpfungselement 94 kann aus einem elastischen Kunststoff hergestellt sein, z.B. aus Gummi. Das Dämpfungselement 94 kann auf einer Seite einen Gewindebolzen aufweisen, über den das Dämpfungselement 94 an der Klappenhalterung 60 verschraubt werden kann. Auf der dem Gewindebolzen gegenüberliegenden Seite kann das Dämpfungselement 94 eine Ausnehmung aufweisen, über die das Dämpfungselement 94 mit dem Betätigungsmittel 93 verbunden werden kann.

Das elastische Material dient dazu, Stöße, die über die Klappe 80 auf das Betätigungsmittel 93 übertragen werden, abzufedern, so dass Geräuschemissionen und die Belastung des Betätigungsmittels 93 reduziert werden können. Außerdem kann über die elastische Anbindung des Betätigungsmittels 93 über das Dämpfungselement 94 an der Klappenhalterung 60 eine Art gelenkige Lagerung geschaffen werden, so dass das Betätigungsmittel 93 um einen geringfügigen Betrag gegenüber der Klappenhalterung 60 verschwenkt werden kann. Bei der dargestellten Ausführungsform beträgt der Betrag, um den das Betätigungsmittel 93 bei der Verlagerung zwischen Ruheposition und Arbeitsposition gegenüber der Klappenhalterung 60 verschwenkt wird, etwa 1°.

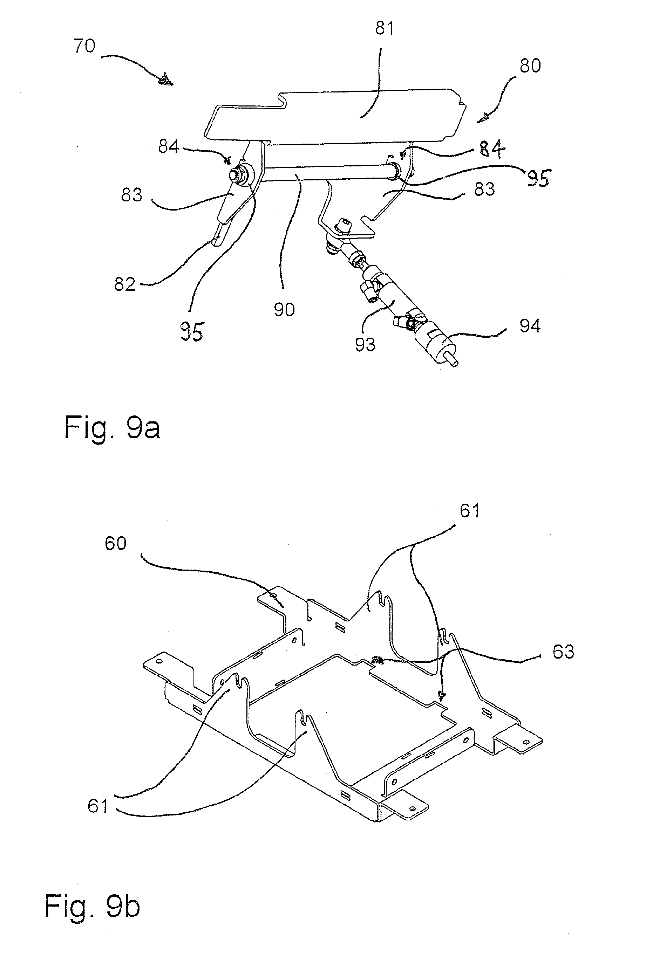

Figur 9a zeigt eine vormontierte Klappenbaugruppe 70 mit einer Klappe 80, einem Achselement 90, einem Betätigungsmittel 93 und einem Dämpfungselement 94.

Dabei ist ersichtlich, dass die Klappe zwei rechtwinklig abgekantete Laschen 83 aufweist, in denen jeweils ein Aufnahmeloch 84 angeordnet ist. In den Aufnahmelöchern 84 ist jeweils ein Lagerelement 95 zur drehbaren Lagerung des jeweiligen Achselements 90 vorgesehen, wie in Figuren 7a und 9a dargestellt. In der dargestellten Ausführungsform sind die Lagerelemente 95 als Gleitlager ausgeführt. Solche Gleitlager können z.B. durch in die Aufnahmelöcher eingesteckte Bronzebuchsen verwirklicht werden. Andere Ausführungsformen sind ebenfalls denkbar. Das Achselement 90 wird durch die in den Aufnahmelöchern 84 der Klappe 80 befindlichen Lagerelemente 95 gesteckt. Die Klappe 80 ist über das Achselement 90 in eine Lagerstelle eingesetzt und dort verschwenkbar angeordnet. Ferner ist ersichtlich, dass die Klappe 80 als Blechbiegeteil ausgebildet ist, das aus einem einzigen Stück Blech gebildet ist.

Figur 9b zeigt die Klappenhalterung 60 mit vier Lagerstellen 61 und zwei Bewegungsbegrenzungselementen 63. Ferner ist ersichtlich, dass die Klappenhalterung 60 als Blechbiegeteil ausgebildet ist, das aus einem einzigen Stück Blech gebildet ist.

Bei der Montage kann die Klappenhalterung 60 in dem Rahmen der Sortiervorrichtung 10 vormontiert werden. Anschließend kann die vormontierte Klappenbaugruppe 70 von oben in die Klappenhalterung 60 eingesetzt werden. Zur Fixierung der vormontierten Klappenbaugruppe 70 müssen dann pro Klappenbaugruppe 70 lediglich zwei Muttern an den Enden des Achselements 90 und eine Mutter am Dämpfungselement 94 angezogen werden, um die Klappenbaugruppe 70 in der Klappenhalterung fertig zu montieren.

### Bezugszeichenliste

- 10: Sortiervorrichtung
- 11: Sortierstrecke
- 12: Abwurfstation
- 13, 13': seitliche Abwurfrutsche
- 14: Fördereinrichtung
- 15, 15': Umlenkrolle
- 16: Keilriemen
- 19, 19': Führungsschiene
- 20, 20': Führungsrollenpaar
- 21: Elektromotor

- 18: Transporteinheit
- 22: Fahrwagen
- 24: Gurtband
- 25, 25': Umlenkrolle
- 26, 26': Reibrolle
- 27: Gegendruckrolle
- 30: Kegelradgetriebe
- 31: Antriebswelle
- 32: Antriebsrad
- 33: Kegelrad
- 34: Abtriebswelle
- 35: Kegelritzel

- 42: Aufgabestation
- 44: Stückgut
- 45: Pfeil zur Richtungsangabe
- 46: Pfeil zur Richtungsangabe

- 60: Klappenhalterung
- 61: Lagerstelle
- 62: U-förmige Ausnehmung
- 63: Bewegungsbegrenzungselement
- 64: Ausnehmung
- 65: erster Randbereich
- 66: zweiter Randbereich

- 70: Klappenbaugruppe

- 80, 80': Klappe
- 81, 81': Antriebskomponente
- 82: Bewegungsbegrenzungskomponente
- 83: Lasche
- 84: Aufnahmeloch
- 85, 85': Hebelarm

- 90, 90': Achselement
- 91: Absatz (separates Absatzelement)
- 92, 92': Federmittel
- 93, 93': Betätigungsmittel
- 94, 94': Dämpfungselement

## Patentansprüche

1. Betätigungseinheit für eine Sortiervorrichtung (10), wobei die Betätigungseinheit eine Klappenhalterung (60) und zumindest eine Klappe (80, 80') mit einer Antriebskomponente (81, 81') zur Übertragung einer Antriebskraft auf ein Antriebsrad (32) einer Transporteinheit (18) aufweist, wobei die Klappe (80, 80') in der Klappenhalterung (60) zwischen einer Ruheposition und einer Antriebsposition verlagerbar gelagert ist,
**dadurch gekennzeichnet, dass** an der Klappe (80, 80') eine Bewegungsbegrenzungskomponente (82) vorgesehen ist, die mit einem Bewegungsbegrenzungselement (63) der Klappenhalterung (60) derart zusammen wirkt, dass die Verlagerungsbewegung der Klappe (80, 80') in Richtung der Ruheposition und/oder in Richtung der Antriebsposition begrenzt wird, wobei die Bewegungsbegrenzungskomponente (82) als Vorsprung an der Klappe (80, 80') ausgebildet ist und das Bewegungsbegrenzungselement (63) durch Ausbildung einer mit dem Vorsprung korrespondierenden Ausnehmung (64) gebildet ist.

2. Betätigungseinheit nach Anspruch 1, wobei sowohl die Antriebskomponente (81, 81') als auch die Bewegungsbegrenzungskomponente (82) integraler Bestandteil der Klappe (80, 80') sind.

3. Betätigungseinheit nach Anspruch 2, wobei die Klappe (80, 80') als Blechbiegeteil hergestellt ist.

4. Betätigungseinheit nach einem der vorstehenden Ansprüche, wobei die Klappenhalterung (60) als Blechbiegeteil ausgebildet ist.

5. Betätigungseinheit nach Anspruch 4, wobei die Ausnehmung (64) im Blechbiegeteil (60) ausgebildet ist.

6. Betätigungseinheit nach einem der vorstehenden Ansprüche, wobei an der Klappe (80, 80') ein Achselement (90, 90') befestigt ist, wobei die Klappe (80, 80') über das Achselement (90, 90') verschwenkbar in der Klappenhalterung (60) montiert ist.

7. Betätigungseinheit nach Anspruch 6, wobei das Achselement (90, 90') in Lagerstellen (61) der Klappenhalterung (60) aufgenommen ist, wobei zumindest eine der Lagerstellen (61) durch eine U-förmige Ausnehmung (62) gebildet ist, die nach einer Seite offen ist.

8. Betätigungseinheit nach einem der vorstehenden Ansprüche, wobei die Betätigungseinheit ferner ein Betätigungsmittel (93, 93') aufweist, das an einem ersten Ende des Betätigungsmittels (93, 93') mit der Klappe (80, 80') und das an einem zweiten Ende des Betätigungsmittels (93, 93') mit der Klappenhalterung (60) verbunden ist, wobei zwischen dem ersten Ende des Betätigungsmittels (93, 93') und der Klappe (80, 80') und/oder zwischen dem zweiten Ende des Betätigungsmittels (93, 93') und der Klappenhalterung (60) ein Dämpfungselement (94) angeordnet ist.

9. Betätigungseinheit nach Anspruch 8, wobei die Befestigung des Betätigungsmittels (93, 93') über das Dämpfungselement (94) eine gelenkartige Verbindung bereitstellt, die eine elastische Verschwenkung des Betätigungsmittels (93, 93') gegenüber der Klappe (80, 80') oder der Klappenhalterung (60) gewährleistet.

10. Sortiervorrichtung (10) mit einer Betätigungseinheit gemäß einem der Ansprüche 1 bis 9.

11. Sortiervorrichtung (10) nach Anspruch 10, wobei die U-förmigen Ausnehmungen (62) der Lagerstellen (61) der Klappenhalterung (60) in der montierten Position der Klappenhalterung (60) in der Sortiervorrichtung (10) nach oben offen sind.

## Claims

1. An actuating unit for a sorting device (10), the actuating unit comprising a flap holder (60) and at least one flap (80, 80') having a drive component (81, 81') for transmitting a drive force to a drive wheel (32) of a transport unit (18), the flap (80, 80) being displaceably mounted in the flap holder (60) between a resting position and a drive position, **characterized in that**
a movement limiting component (82) is provided on the flap (80, 80'), said movement limiting component cooperating with a movement limiting element (63) of the flap holder (60), such that the displacement movement of the flap (80, 80') is limited in the direction of the resting position and/or in the direction of the drive position, with the movement limiting component (82) being configured as a projection on the flap (80, 80') and the movement limiting element (63) being formed by configuring a recess (64) corresponding to the projection.

2. The actuating unit according to claim 1, both the drive component (81, 81') and the movement limiting component (82) being an integral component of the flap (80, 80').

3. The actuating unit according to claim 2, the flap (80, 80') being produced as a bent sheet metal part.

4. The actuating unit according to one of the preceding claims, the flap holder (60) being configured as a bent sheet metal part.

5. The actuating unit according to claim 4, the recess (64) being formed in the bent sheet metal part (60).

6. The actuating unit according to one of the preceding claims, an axle element (90, 90') being fastened to the flap (80, 80'), with the flap (80, 80') being pivotably mounted via the axle element (90, 90') in the flap holder (60).

7. The actuating unit according to claim 6, the axle element (90, 90') being received in bearings (61) of the flap holder (60), at least one of the bearings (61) being formed by a U-shaped recess (62) which is open on one side.

8. The actuating unit according to one of the preceding claims, the actuating unit also comprising an actuating means (93, 93') which is connected at a first end of the actuating means (93, 93') to the flap (80, 80') and which is connected at a second end of the actuating means (93, 93') to the flap holder (60), a damping element (94) being arranged between the first end of the actuating means (93, 93') and the flap (80, 80') and/or between the second end of the actuating means (93, 93') and the flap holder (60).

9. The actuating unit according to claim 8, the fastening of the actuating means (93, 93') via the damping element (94) providing an articulated connection which ensures a resilient pivoting of the actuating means (93, 93') relative to the flap (80, 80') or the flap holder (60).

10. A sorting device (10) having an actuating unit according to one of claims 1 to 9.

11. The sorting device (10) according to claim 10, the U-shaped recesses (62) of the bearings (61) of the flap holder (60) being upwardly open in the mounted position of the flap holder (60) in the sorting device (10).

## Revendications

1. Module d'actionnement pour un dispositif de tri (10), dans lequel le module d'actionnement présente une fixation à clapet (60) et au moins un clapet (80, 80') avec un composant d'entraînement (81, 81') pour la transmission d'une force d'entraînement sur une roue d'entraînement (32) d'un module de transport (18), dans lequel le clapet (80, 80') est logé de manière à pouvoir être déplacé dans la fixation à clapet (60) entre une position de repos et une position d'entraînement, **caractérisé en ce qu'**un composant de limitation de mouvement (82) est prévu sur le clapet (80, 80'), lequel coopère avec un élément de limitation de mouvement (63) de la fixation à clapet (60) de telle sorte que le mouvement de déplacement du clapet (80, 80') est limité en direction de la position de repos et/ou en direction de la position d'entraînement, dans lequel le composant de limitation de mouvement (82) est réalisé en tant que saillie sur le clapet (80, 80') et l'élément de limitation de mouvement (63) est formé par réalisation d'un évidement (64) correspondant à la saillie.

2. Module d'actionnement selon la revendication 1, dans lequel aussi bien le composant d'entraînement (81, 81') que le composant de limitation de mouvement (82) font partie intégrante du clapet (80, 80').

3. Module d'actionnement selon la revendication 2, dans lequel le clapet (80, 80') est fabriqué en tant que pièce pliée en tôle.

4. Module d'actionnement selon une des revendications précédentes, dans lequel la fixation à clapet (60) est réalisée en tant que pièce pliée en tôle.

5. Module d'actionnement selon la revendication 4, dans lequel l'évidement (64) est réalisé dans la pièce pliée en tôle (60).

6. Module d'actionnement selon une des revendications précédentes, dans lequel un élément axial (90, 90') est fixé au clapet (80, 80'), dans lequel le clapet (80, 80') est monté dans la fixation à clapet (60) de manière à pouvoir pivoter par le biais de l'élément axial (90, 90').

7. Module d'actionnement selon la revendication 6, dans lequel l'élément axial (90, 90') est reçu dans des points d'appui (61) de la fixation à clapet (60), dans lequel au moins un des points d'appui (61) est formé par un évidement en forme de U (62) qui est ouvert vers un côté.

8. Module d'actionnement selon une des revendications précédentes, dans lequel le module d'actionnement présente en outre un moyen d'actionnement (93, 93') qui est relié à une première extrémité du moyen d'actionnement (93, 93') au clapet (80, 80') et qui est relié à une seconde extrémité du moyen d'actionnement (93, 93') à la fixation à clapet (60), dans lequel un élément d'amortissement (94) est disposé entre la première extrémité du moyen d'actionnement (93, 93') et le clapet (80, 80') et/ou entre la seconde extrémité du moyen d'actionnement (93, 93') et la fixation à clapet (60).

9. Module d'actionnement selon la revendication 8, dans lequel la fixation du moyen d'actionnement (93, 93') par le biais de l'élément d'amortissement (94) met à disposition une connexion articulée qui garantit un pivotement élastique du moyen d'actionnement (93, 93') par rapport au clapet (80, 80') ou à la fixation à clapet (60).

10. Dispositif de tri (10) avec un module d'actionnement selon une des revendications 1 à 9.

11. Dispositif de tri (10) selon la revendication 10, dans lequel les évidements en forme de U (62) des points d'appui (61) de la fixation à clapet (60) sont ouverts vers le haut dans la position montée de la fixation à clapet (60) dans le dispositif de tri (10).
